# EUROPEAN PATENT APPLICATION

(11) **EP 4 783 107 A1**
(43) Date of publication of application: **29.07.2026**
(21) Application number: 25193879.1
(22) Date of filing: 04.08.2025
(51) Int. Cl.: G06T 5/70, G01S 17/89

(54) **NOISE REDUCTION FOR LASER SCANNER MEASUREMENTS**

(30) Priority: 23.01.2025 EP 25153622
(71) Applicant: Leica Geosystems AG, 9435 Heerbrugg (CH)
(72) Inventor: FACCHIN, Aldo, I-33082 Azzano Decimo (IT); CORAZZA, Paolo, 33080 Fiume Veneto (IT); SANELLI, Valerio, 33170 Pordenone (IT)
(74) Representative: Kaminski Harmann

(57) **Abstract**

The invention pertains to a computer-implemented method (100) of of reducing noise in 3D point-cloud data, wherein reducing (120) the noise is performed by a trained machine learning model using filtering settings that have been learned by the machine learning model in a training process (200) comprising: receiving (210) a first set of 3D point-cloud data of an environment, the first set of 3D point-cloud data being captured with the first resolution; receiving (220) a second set of 3D point-cloud data of the environment, the second set of 3D point-cloud data being captured by a second laser scanner with a second resolution, the second resolution being higher than the first resolution; generating (230) training data based on the first set of 3D point-cloud data and the second set of 3D point-cloud data; and training (240) the machine learning model using the training data. Generating the training data comprises: classifying the second set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs; identifying clusters within the classified point-cloud based on local minima and/or maxima, each cluster comprising a plurality of points of the classified point cloud that belong to a same surface; and associating, based on the identified clusters, regions within the first set of 3D data with regions within the second set of 3D data to produce the training data. The invention also pertains to a method of training the machine learning model and to a laser scanner comprising the trained machine learning model.

## Description

The present invention generally pertains to a method for reducing noise in 3D data produced by laser scanners. Specifically, the process comprises using a machine learning model for reducing the noise, filtering settings being learned by the machine learning model in a training process. The invention further pertains to a laser scanner for performing the method and to a method for training the machine learning model.

For autonomous driving applications, mobile mapping, simultaneous localization and mapping, or for the purpose of surveying, optical devices are commonly used which work with optical measuring beams for scanning a surface and capturing of the topography by distance measurements to points on the surface. A suitable scanning device may be a scanner system, such as a laser scanner, in particular a profiler, which allows for capturing a surface structure by guiding a measuring beam in a scanning manner over the surface and by capturing the spatial positions of surface points in the scanning area with a distance measurement relating to the points and linking the measurement with angle information gathered at the time of the measuring beam emission. From the angle and distance information (range), so called range images of the scanned surfaces may be reconstructed.

In other words, an environment can be optically scanned and measured by means of a laser scanner emitting a laser measurement beam, e.g. using pulsed electromagnetic radiation, wherein an echo is received from a backscattering surface point of the environment and a distance to the surface point is derived and associated with an angular emission direction of the associated laser measurement beam. This way, a three-dimensional point cloud is generated. For example, the distance measurement may be based on the time of flight, the shape, and/or the phase of the pulse.

A profiler for capturing topographies may also be realized by an electro-optical distance meter, which is guided over a surface area in a scanning manner, and which may use laser light.

In linearly passable hollow spaces, such as rooms, corridors, mines, tunnels, canyons or alleys, the profiler is usually mounted to a vehicle in such a way that the scanning movement of the measuring beam - in a first scanning direction - takes place about an axis which is essentially parallel to the direction of movement of the vehicle, wherein the direction of movement of the vehicle is a second scanning direction.

Reducing or eliminating noise in LiDAR point clouds is generally known. For instance, N. Charron et al.: "De-noising of Lidar Point Clouds Corrupted by Snowfall" (15th Conference on Computer and Robot Vision (CRV), 8 May 2018, pages 254-261) discloses the use of filters to remove noise from LiDAR point clouds wherein the noise occurs due to adverse weather conditions such as snowfall.

For some applications, such as mobile mapping, a high accuracy, e.g. at least a centimetre-level accuracy is necessary. While high-end laser scanners having a sufficiently high accuracy commonly come at high costs, the accuracy of more affordable devices ("low-end" devices) usually does not suffice for such applications. Achieving centimetre-level accuracy is typically not achievable for low-end devices due to signal noise.

It is therefore an object of the invention to provide a method that allows using low-end laser scanners for applications that require high accuracy, particularly at least centimetre-accuracy. It is a particular object to provide such a method that allows reducing the noise occurring in measurements of low-end laser scanners.

At least one of these objects is achieved by the appended claims - in particular by realizing the characterizing features of the independent claims. Features, which further develop the invention in an alternative or advantageous manner are described in the dependent claims.

Reducing or eliminating noise serves to increase the resolution of laser scanning devices, particularly of the low-end (i.e., low-cost and/or low-quality) devices, in order to allow to enhance the applicability of laser scanning devices and allow for the utilization of low-end devices. This allows for the usage of low-end devices to create a detailed 3D reconstruction of an environment for precise measurement applications. The method described in this document particularly can be applied in urban environments comprising many man-made structures such as buildings, roads, and other stationary objects, but it can also be used in non-urban environments.

A first aspect of the invention pertains to a computer-implemented method of reducing noise in 3D point-cloud data. The method comprises receiving 3D point-cloud data that has been captured by a first laser scanner with a first resolution and reducing noise in the received 3D point-cloud data. According to this aspect of the invention, reducing the noise is performed by a trained machine learning model using filtering settings that have been learned by the machine learning model in a training process.

The first laser scanner can be a low-end device having a relatively low resolution, wherein the noise at least partially results from this low resolution. The training process involves a second laser scanner, which may be a high-end device having a sufficient resolution to avoid such noise.

Said training process comprises:
- receiving a first set of 3D point-cloud data of an environment, the first set of 3D point-cloud data being captured with the first resolution (e.g., with the first laser scanner or with an identical device);
- receiving a second set of 3D point-cloud data of the environment, the second set of 3D point-cloud data being captured by a second laser scanner with a second resolution, the second resolution being higher than the first resolution;
- generating training data based on the first set of 3D point-cloud data and the second set of 3D point-cloud data; and
- training the machine learning model using the training data.

The step of generating the training data comprises:
- classifying the second set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs to;
- identifying clusters within the classified point-cloud based on local minima and/or maxima, each cluster comprising a plurality of points of the classified point cloud that belong to a same surface; and
- associating, based on the identified clusters, regions within the first set of 3D data with regions within the second set of 3D data to produce the training data.

According to some embodiments of the method, receiving the 3D point-cloud data comprises the first laser scanner producing the 3D point-cloud data in a measurement process. Preferably, the trained machine learning model may be provided on the first laser scanner. Alternatively, it may be provided on a separate device, e.g., a remote server or a mobile computing device, the separate device having access to the 3D point-cloud data produced by the first laser scanner via a data connection, e.g., via a wireless data connection.

According to some embodiments of the method, receiving the first set of 3D point-cloud data comprises the first laser scanner producing the first set of 3D point-cloud data in a measurement process, and receiving the second set of 3D point-cloud data comprises the second laser scanner producing the second set of 3D point-cloud data in a measurement process.

According to some embodiments of the method, the first set of 3D point-cloud data and the second set of 3D point-cloud data comprise data of at least a second environment, for instance data of a plurality of different environments.

According to some embodiments of the method, the machine learning model is an unsupervised learning model, such as an autoencoder.

According to some embodiments of the method, the first laser scanner and the second laser scanner are embodied as laser profilers.

According to some embodiments of the method, the training data - and, e.g., the first set of 3D point-cloud data and the second set of 3D point-cloud data - comprises range data and angle data. Optionally, the training data also comprises at least one of trajectory data, intensity data, and raw data.

According to some embodiments, identifying clusters comprises determining local minima and/or maxima within the angle data and the range data.

According to some embodiments of the method, associating the regions comprises using calibration parameters of the second laser scanner to project points using the first laser scanner and select points of the first set of 3D point-cloud data depending on a radius between the projected points and the corresponding point of the second set of 3D point-cloud data.

According to some embodiments of the method, the training data - and, e.g., the first set of 3D point-cloud data and the second set of 3D point-cloud data - comprises at least range data, the machine learning model uses a binary cross entropy function, and to avoid odd loss values for the binary cross entropy function, generating the training data comprises normalizing ranges, e.g., to be contained in the range of 0 to 1.

A second aspect of the invention pertains to a computer-implemented method of training a machine learning model to learn filtering for reducing noise in 3D point-cloud data that has been captured by a first laser scanner with a first resolution. The method comprises:
- receiving a first set of 3D point-cloud data of an environment, the first set of 3D point-cloud data being captured with the first resolution;
- receiving a second set of 3D point-cloud data of the environment, the second set of 3D point-cloud data being captured by a second laser scanner with a second resolution, the second resolution being higher than the first resolution;
- generating training data based on the first set of 3D point-cloud data and the second set of 3D point-cloud data; and
- training the machine learning model using the training data.

Generating the training data comprises:
- classifying the first set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs to;
- identifying clusters within the classified point-cloud based on local minima and/or maxima, each cluster comprising a plurality of points of the classified point cloud that belong to a same surface; and
- associating, based on the identified clusters, regions within the first set of 3D data with regions within the second set of 3D data to produce the training data.

According to some embodiments of the method, receiving the 3D point-cloud data comprises the first laser scanner producing the 3D point-cloud data in a measurement process. Optionally, the trained machine learning model may be provided on the first laser scanner.

According to some embodiments of the method, receiving the first set of 3D point-cloud data comprises the first laser scanner producing the first set of 3D point-cloud data in a measurement process, and receiving the second set of 3D point-cloud data comprises the second laser scanner producing the second set of 3D point-cloud data in a measurement process.

According to some embodiments of the method, the first set of 3D point-cloud data and the second set of 3D point-cloud data comprise data of at least a second environment, for instance data of a plurality of different environments.

According to some embodiments of the method, the machine learning model is an unsupervised learning model, such as an autoencoder.

According to some embodiments of the method, the first laser scanner and the second laser scanner are embodied as laser profilers.

According to some embodiments of the method, the training data - and, e.g., the first set of 3D point-cloud data and the second set of 3D point-cloud data - comprises range data and angle data. Optionally, the training data also comprises at least one of trajectory data, intensity data, and raw data.

According to some embodiments, identifying clusters comprises determining local minima and/or maxima within the angle data and the range data.

According to some embodiments of the method, associating the regions comprises using calibration parameters of the second laser scanner to project points using the first laser scanner and select points of the first set of 3D point-cloud data depending on a radius between the projected points and the corresponding point of the second set of 3D point-cloud data.

According to some embodiments of the method, the training data - and, e.g., the first set of 3D point-cloud data and the second set of 3D point-cloud data - comprises at least range data, the machine learning model uses a binary cross entropy function, and to avoid odd loss values for the binary cross entropy function, generating the training data comprises normalizing ranges, e.g., to be contained in the range of 0 to 1.

A third aspect of the invention pertains to a laser scanner, e.g., a laser profiler, configured for producing 3D point-cloud data of a first environment with a first resolution, and for reducing noise in the 3D data using filtering settings. According to this aspect of the invention, a trained machine learning model is provided on the laser scanner and configured to perform the noise reduction, the filtering settings being learned by the machine learning model in a training process according to the method of the first aspect of the invention.

Specifically, the training process comprises:
- receiving a first set of 3D point-cloud data of an environment, the first set of 3D point-cloud data being captured by the first laser scanner with the first resolution;
- receiving a second set of 3D point-cloud data of the environment, the second set of 3D point-cloud data being captured by a second laser scanner with a second resolution, the second resolution being higher than the first resolution;
- generating training data based on the first set of 3D point-cloud data and the second set of 3D point-cloud data; and
- training the machine learning model using the training data.

The step of generating the training data comprises:
- classifying the first set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs to;
- identifying clusters within the classified point-cloud based on local minima and/or maxima, each cluster comprising a plurality of points of the classified point cloud that belong to a same surface; and
- associating, based on the identified clusters, regions within the first set of 3D data with regions within the second set of 3D data.

A fourth aspect of the invention pertains to a computer program product comprising program code, which is stored on a machine-readable medium or being embodied by an electromagnetic wave comprising a program code segment, and having computer-executable instructions for performing the method according to the first aspect of the invention, particularly when executed on a laser scanner according to the third aspect.

A fifth aspect of the invention pertains to a computer program product comprising program code, which is stored on a machine-readable medium or being embodied by an electromagnetic wave comprising a program code segment, and having computer-executable instructions for performing the method according to the second aspect of the invention.

The invention in the following will be described in detail by referring to exemplary embodiments that are accompanied by figures, in which:
- Fig. 1: shows a laser profiler as it may be utilized in areas of application, such as mobile mapping;
- Fig. 2: shows an exemplary plot of laser measurement data as it may be captured by a laser profiler;
- Fig. 3: shows an exemplary polar plot of laser measurement data as it may be captured by a laser profiler;
- Fig. 4: shows a flowchart illustrating steps of a first exemplary embodiment of a method according to the invention for reducing noise in 3D data; and
- Fig. 5: shows a flowchart illustrating the steps of generating the training data first according to the first exemplary embodiment of a method.

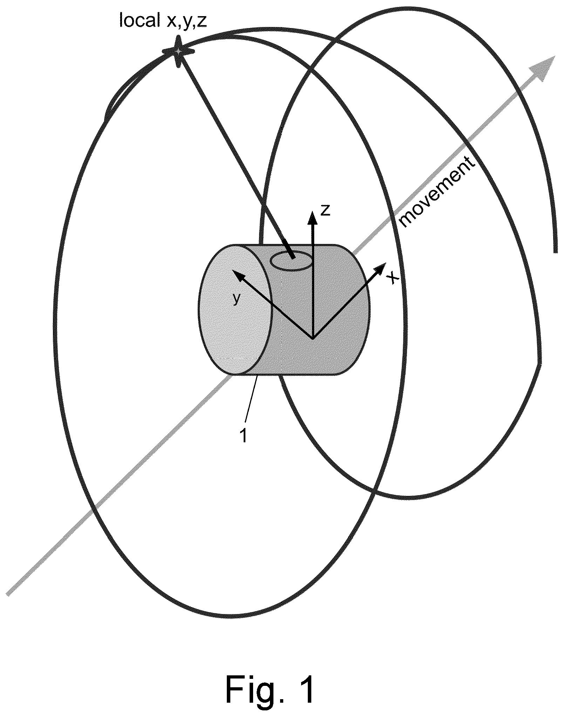

Figure 1 shows a LiDAR profiler as an exemplary embodiment of a laser scanner 1 according to the invention. The shown LiDAR profiler is configured to capture a surface structure by guiding a measuring beam in a scanning manner over a surface. A LiDAR profiler uses laser pulses to measure distances to objects. The LiDAR emits laser pulses that hit the distant objects and when reflected, the time to travel to the object and back is registered and used, along with the speed of light, to determine the distance of the object. While emitting pulses, the LiDAR also rotates a full revolution of 360 degrees. In the case of a single beam LiDAR (a so-called profiler) moving along one direction (the trajectory), the profile described by the LiDAR is a spiral, like the one depicted in Figure 1. In other words, a laser measurement may be moved on a trajectory through an environment that is to be scanned (indicated by the arrow labelled "movement"). Therefore, the beam is moved such that it rotates about an axis, commonly orthogonal to the trajectory, in order to capture three-dimensional information about the environment. Consequently, the path of the laser measurement beam may result in a spiral.

The resolution of the laser scanner depends on a variety of factors. Hence, the desired minimal resolution for the application also limits the speed at which the laser scanner may be moved through the environment, therefore restricting the minimally possible time of measurement campaigns.

One use case of the present invention involves removing noise from LiDAR (Light Detection and Ranging) sensors used in mobile mapping. Mobile-mapping systems typically use low-end LiDAR sensors that produce measurement noise. To create a detailed 3D reconstruction of an environment for precise measurement applications, this noise needs to be reduced (or eliminated). For this type of application, it is generally necessary to achieve centimetre-level accuracy.

Profilers are largely diffuse in the context of mobile mapping. A main challenge in this context arises from the need to synchronize a trajectory with the raw data coming from the scanner. The trajectory refers to the position and orientation of the sensor at a given time. The raw data is acquired in the sensor's local frame and needs to be associated with trajectory information to geo-reference the point cloud and to know precisely the position of the scanned surfaces at any point in time.

In the following an adaptive range smoothing filter is described, where the filtering settings are learned by an artificial-intelligence (AI) or machine learning (ML) model. The input to the model may comprise the range and the angle and further the trajectory, intensity, and the raw data of the previous scan lines. The usage of an AI model alleviates the need of defining several smoothing functions and to tune parameters based on the different devices and scanned environments. The filter will learn that low intensity or long range allow more smoothing while changes in range or between the scan lines indicate geometric structures that we want to preserve.

The model is trained based on clusters of LiDAR data that represents meaningful information. A cluster is composed by points that belong to the same surface to ensure that the geometry of the scanned scene is preserved. Once the clusters are identified, regions of the low-end LiDAR can be associated with the ones of the high-end LiDAR.

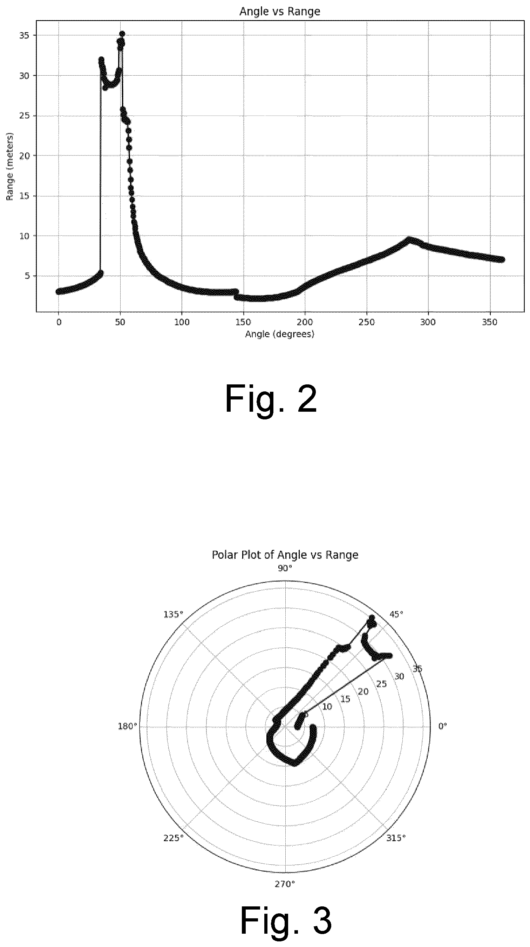

To train the model, a dataset needs to be prepared that is composed of the reference data, coming from the high-end profiler, and the data from the low-end profiler. The data is composed by cluster of points represented as angle-range, as shown in Figures 2 and 3.

Figure 2 shows an exemplary plot of laser measurement data as it may be captured by a laser scanner, e.g. a laser profiler. It is noted that the X-Axis of the plot depicts angular information, whereas the Y-Axis of the plot depicts distance information (range) of the measurement.

Figure 3 shows an exemplary polar plot of laser measurement data according to Figure 2 as it may be captured by a laser scanner, e.g. a laser profiler. It is noted that the angular axis comprises angle information, whereas the radial axis depicts the distance information (range) of the measurement.

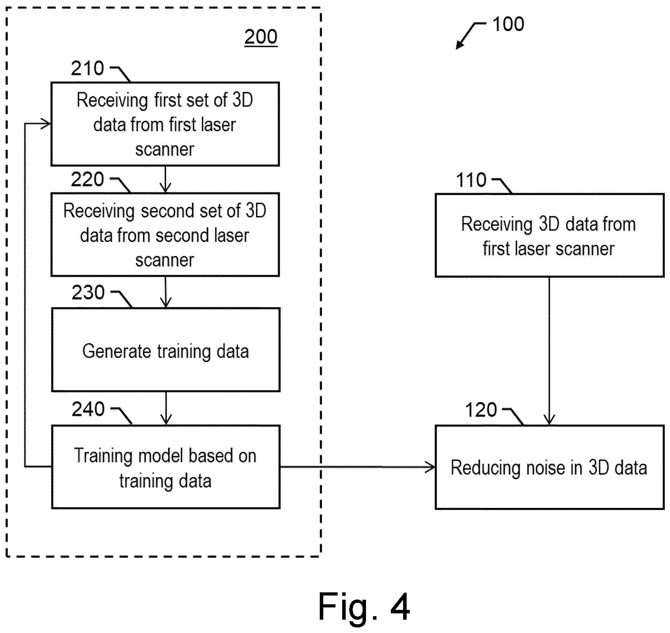

Figure 4 shows a flowchart illustrating the steps of an exemplary embodiment of a method 100 according to the invention. The method comprises receiving 110 three-dimensional (3D) point-cloud data from a first laser scanner. Optionally, receiving the 3D data comprises capturing the 3D data by the laser scanner. The first laser scanner may be a low-end device having relatively a low resolution, wherein the 3D data is noisy due to the low resolution.

Then, noise in the received 3D data is reduced 120 using a machine learning model, wherein filtering settings have been learned by the machine learning model in a training process 200.

The training process 200 for learning the filtering settings starts with receiving 210 a first set of 3D data from the first laser scanner or from a laser scanner that is basically identical to the first laser scanner (e.g., identically constructed), and receiving 220 a second set of 3D data from a second laser scanner. The first laser scanner may be a low-end device, while the second laser scanner has a higher resolution than the first laser scanner, so that the first set of 3D data was captured with a first resolution, and the second set of 3D data was captured with a second resolution, wherein the second resolution is higher than the first resolution. Both sets of 3D data comprise data of the same environment and are structured as point clouds. The first set of 3D data and the second set of 3D data may comprise data of a different environment than the environment of the 3D data for which the noise reduction is to be applied. However, in certain applications it also comprises 3D data of the same environment or even of multiple environments. In certain applications the first and second sets of 3D data are also captured in controlled environments or are artificially generated.

As a next step, training data is generated 230 based on the received sets of 3D data, and the machine learning model is trained 240 using this training data to learn the filtering settings for reducing 120 the noise in 3D data having the first (low) resolution.

The learned filtering settings of trained machine learning model (the noise reduction filter) are then used for reducing the noise of the 3D data provided by the first laser scanner. If the received 3D data is 3D of an ongoing scanning process of the laser scanner, reducing 120 the noise using the trained model may be performed, e.g., in real time during the scanning, in fixed or predefined time intervals, after the scanning has been finished, and/or upon receiving a corresponding input from an operator of the laser scanner.

It is noted that the training process and the utilization of the learned filtering settings do not have to be conducted at the same time or even on the same device. It is also possible to carry out the training process prior to applying the filter. The usage of the learned filtering settings can also be done during a measurement campaign, wherein the training process can be performed in a controlled environment or the same environment prior to the utilization of the learned filtering settings. The trained machine learning model may also be provided to other laser scanners than the first laser scanner and used for reducing the noise of the 3D data provided by the respective other laser scanner. These other laser scanners preferably are identical or basically identical to the first laser scanner, i.e., have the same scanning resolution as the first laser scanner.

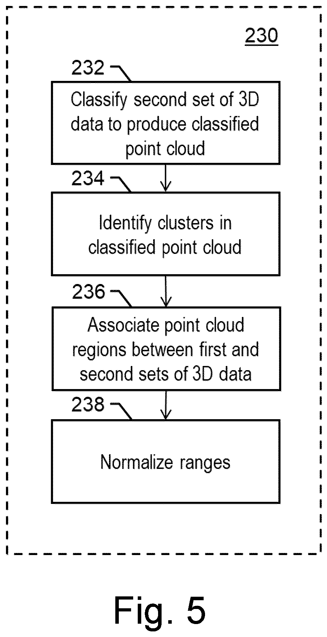

Figure 5 shows a flowchart illustrating the steps of an exemplary embodiment according to the invention for generating 230 the training data for the training process. To train the model, as already mentioned above, a dataset is prepared that is composed of the data from the low-end profiler, i.e. the first set of 3D data, and the reference data from the high-end profiler, i.e. the second set of 3D data. To generate 230 the training data, in the shown embodiment the following three steps are performed:
1. classify 232 the points of the point cloud to filter out meaningless information;
2. identify 234 clusters of points that belongs to the same region; and
3. refence-noisy data association 236.

The first step is to classify 232 a point cloud based on a semantic segmentation model. This model will assign to each point a class for the specific object it belongs to (e.g., "building", "road", "vegetation", etc.). Points belonging to non-man-made structures are filtered out as they usually do not present meaningful information and may be treated as noise. The remaining point cloud is then fed to a min/max algorithm for clusters identification 234.

The second step comprises identifying 234 clusters by searching for local minima and maxima inside the data. This is needed to ensure that the points refer to the same surface. Discontinuities in the data can be identified by converting the angle-range representation of the points to 2D cartesian coordinates. Whenever there is a gap between two subsequent points in 2D coordinates, a new cluster is created. A cluster may occur, e.g., if:
- the considered sections present peaks (local minima/maxima) in angle range representation;
- the angular difference in angle range representation between two points exceeds an angular threshold;
- the angular difference in angle range representation is below the angular threshold, but the range difference exceeds a range threshold; or
- the angular difference in angle range representation is below the angular threshold and the range difference is below the range threshold, but the angles difference in cartesian coordinate exceeds a certain threshold.

Clusters with few points may be treated as outliers and discarded since they are not describing any geometry and thus cannot contribute to the training process.

Subsequently, once all the clusters are identified, the same region on the point cloud generated by the high-end profiler needs to be recovered. Regions comprised by the point-cloud of the second set of 3D data are associated 236 with the corresponding regions comprised by the first set of 3D data. Depending on the target device, this can be achieved in several ways. In the case of a mobile mapping platform, calibration parameters may be used to re-project points from one LiDAR to the other and select the corresponding point within a radius. To project one point cloud into the coordinate frame of another point cloud in a multi-laser scanner system, extrinsic calibration parameters are used, which define the rigid transformation (rotation and translation) between the coordinate systems of the scanners.

The (deep) machine learning model used may be an autoencoder. This kind of model is usually applied in computer vision applications. The training set is composed of data clustered with the method described in Figure 5. To prepare the data for the training though, an additional step 238 may be applied for normalizing the ranges to be contained in the range of 0 to 1 to avoid odd loss values for a binary cross entropy function and allow the model to converge. Once trained, the model can correct the ranges values to reduce the noise.

Of course, the training process of the method 100 illustrated in Figures 4 and 5 can also be performed as a separate method 200 for training a machine learning model to learn filtering settings for reducing noise in 3D data. This training method 200 can be executed independently from the rest of the illustrated method 100.

The trained machine learning model may be stored directly on a laser scanner to improve the noise reduction in subsequent scanning operations. In particular, this laser scanner may be the first laser scanner, a laser scanner that is constructed - basically or exactly - in the same way, or a laser scanner having the same scanning resolution as the first laser scanner (i.e., the first resolution). Alternatively, the trained machine learning model may may be provided on a separate device that has a data connection with the laser scanner, e.g., a wireless data connection. For instance, the separate device may be a remote server computer or a mobile computing device of the operator of the laser scanner. To reduce the noise in the 3D point-cloud data produced by the laser scanner using the trained machine learning model, the separate device may have access to the 3D point-cloud data, or the laser scanner may have access to the machine learning model.

The adaptive range smoothing filter based on AI provides a versatile and robust solution for processing LiDAR data. By leveraging AI, the filter can dynamically adapt to different sensor configurations and environmental conditions, ensuring optimal performance in both urban and non-urban settings. This approach enhances the accuracy and reliability of LiDAR data, making it valuable for a wide range of applications, from autonomous driving to environmental monitoring. The method applies to both single and multi-beam LiDAR, as each beam can be considered independent.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) of reducing noise in 3D point-cloud data, the method comprising
- receiving (110) 3D point-cloud data that has been captured by a first laser scanner with a first resolution, and
- reducing (120) noise in the 3D point-cloud data,
**characterized in that**
reducing (120) the noise is performed by a trained machine learning model using filtering settings that have been learned by the machine learning model in a training process (200) comprising
- receiving (210) a first set of 3D point-cloud data of an environment, the first set of 3D point-cloud data being captured with the first resolution;
- receiving (220) a second set of 3D point-cloud data of the environment, the second set of 3D point-cloud data being captured by a second laser scanner with a second resolution, the second resolution being higher than the first resolution;
- generating (230) training data based on the first set of 3D point-cloud data and the second set of 3D point-cloud data; and
- training (240) the machine learning model using the training data, wherein generating (230) the training data comprises
- classifying (232) the second set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs;
- identifying (234) clusters within the classified point-cloud based on local minima and/or maxima, each cluster comprising a plurality of points of the classified point cloud that belong to a same surface; and
- associating (236), based on the identified clusters, regions within the first set of 3D data with regions within the second set of 3D data to produce the training data.

2. Computer-implemented method (100) according to claim 1, wherein receiving (110) the 3D point-cloud data comprises the first laser scanner producing the 3D point-cloud data in a measurement process, particularly wherein the trained machine learning model is provided on the first laser scanner.

3. Computer-implemented method (100) according to claim 1 or 2, wherein
- receiving (210) the first set of 3D point-cloud data comprises the first laser scanner producing the first set of 3D point-cloud data; and/or
- receiving (220) the second set of 3D point-cloud data comprises the second laser scanner producing the second set of 3D point-cloud data.

4. Computer-implemented method (100) according to any of the preceding claims, wherein the first set of 3D point-cloud data and the second set of 3D point-cloud data comprise data of at least a second environment, in particular of a plurality of different environments.

5. Computer-implemented method (100) according to any of the preceding claims, wherein the machine learning model is an unsupervised learning model.

6. Computer-implemented method (100) according to any of the preceding claims, wherein the machine learning model is an autoencoder.

7. Computer-implemented method (100) according to any of the preceding claims, wherein the first laser scanner and the second laser scanner are embodied as laser profilers.

8. Computer-implemented method (100) according to any of the preceding claims, wherein the training data comprises range data and angle data, particularly wherein the training data further comprises at least one of trajectory data, intensity data, and raw data.

9. Computer-implemented method (100) according to claim 8, wherein identifying (234) clusters comprises determining local minima and/or maxima within the range data and the angle data.

10. Computer-implemented method (100) according to any of the preceding claims, wherein associating (236) the regions comprises using calibration parameters of the second laser scanner to project points using the first laser scanner and select points of the first set of 3D point-cloud data depending on a radius between the projected points and the corresponding point of the second set of 3D point-cloud data.

11. Computer-implemented method (100) according to any of the preceding claims, wherein
- the training data comprises at least range data;
- the machine learning model uses a binary cross entropy function; and
- to avoid odd loss values for the binary cross entropy function, generating (230) the training data comprises normalizing (238) ranges, particularly to be contained in the range of 0 to 1.

12. Computer-implemented method (200) of training a machine learning model to learn filtering settings for reducing (120) noise in 3D point-cloud data that has been captured by a first laser scanner with a first resolution, the method (200) comprising
- receiving (210) a first set of 3D point-cloud data of an environment, the first set of 3D point-cloud data being captured with the first resolution;
- receiving (220) a second set of 3D point-cloud data of the environment, the second set of 3D point-cloud data being captured by a second laser scanner with a second resolution, the second resolution being higher than the first resolution;
- generating (230) training data based on the first set of 3D point-cloud data and the second set of 3D point-cloud data; and
- training (240) the machine learning model using the training data, wherein generating (230) the training data comprises
- classifying (232) the first set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs;
- identifying (234) clusters within the classified point-cloud based on local minima and/or maxima, each cluster comprising a plurality of points of the classified point cloud that belong to a same surface; and
- associating (236), based on the identified clusters, regions within the first set of 3D data with regions within the second set of 3D data to produce the training data.

13. Laser scanner (1) configured for producing 3D point-cloud data with a first resolution of a first environment, the laser scanner being configured for reducing noise (120) in the 3D data,
**characterized in that**
a trained machine learning model is provided on the laser scanner and configured to perform the noise reduction (120) using filtering settings, the filtering settings being learned by the machine learning model in a training process (200) comprising
- receiving (210) a first set of 3D point-cloud data of an environment, the first set of 3D point-cloud data being captured with the first resolution;
- receiving (220) a second set of 3D point-cloud data of the environment, the second set of 3D point-cloud data being captured by a second laser scanner with a second resolution, the second resolution being higher than the first resolution;
- generating (230) training data based on the first set of 3D point-cloud data and the second set of 3D point-cloud data; and
- training (240) the machine learning model using the training data,
wherein generating (230) the training data comprises
- classifying (232) the first set of 3D point-cloud data based on a semantic segmentation model, wherein the classifying comprises assigning to at least a subset of the second set of 3D point-cloud data a plurality of classes in order to produce a classified point-cloud, the plurality of classes describing different objects to which each point belongs to;
- identifying (234) clusters within the classified point-cloud based on local minima and/or maxima, each cluster comprising a plurality of points of the classified point cloud that belong to a same surface; and
- associating (236), based on the identified clusters, regions within the first set of 3D data with regions within the second set of 3D data

14. Computer program product comprising program code, which is stored on a machine-readable medium or being embodied by an electromagnetic wave comprising a program code segment, and having computer-executable instructions for performing the method (100) according to any one of claims 1 to 11.
